# EUROPEAN PATENT APPLICATION

(11) **EP 4 787 984 A1**
(43) Date of publication of application: **05.08.2026**
(21) Application number: 24870478.5
(22) Date of filing: 13.09.2024
(51) Int. Cl.: H04W 56/00

(54) **CLOCK SYSTEM FEEDBACK METHOD AND APPARATUS, AND TERMINAL, NETWORK DEVICE AND STORAGE MEDIUM**

(30) Priority: 26.09.2023 CN 202311249872
(71) Applicant: China Mobile Communication Co., Ltd Research Institute, Beijing 100053 (CN); China Mobile Communications Group Co., Ltd., Beijing 100032 (CN)
(72) Inventor: WU, Min, Beijing 100032 (CN); TANG, Yurong, Beijing 100032 (CN)
(74) Representative: Herrero & Asociados, S.L.
(86) International application number: PCT/CN2024/118733
(87) International publication number: WO 2025/066934

(57) **Abstract**

The present disclosure relates to the technical field of communications. Provided are a clock system feedback method and apparatus, and a terminal, a network device and a storage medium. The clock system feedback method is applied to the terminal, and the method comprises: sending to a network device target information related to feedback of a radio access network (RAN) side, wherein the target information comprises at least one of the following: a service burst arrival time offset; an adjusted periodicity; and a change value of the adjusted periodicity.

## Description

The present disclosure claims priority of Chinese Patent Application No. 202311249872.7, filed on September 26, 2023, the contents of which are hereby incorporated by reference.

### TECHNICAL FIELD

The present disclosure relates to the field of communications, and in particular, to a clock system feedback method and an apparatus, and a terminal, a network device and a storage medium.

### BACKGROUND

In relevant protocols, a Time Sensitive Network (TSN) based on the 5th Generation Mobile Communication Technology (5G) system can provide time synchronization services. In the TSN, a Radio Access Network (RAN) side feedback is proposed for burst arrival time offset and adjusted periodicity.

The related art is mainly targeted at Extended Reality (XR) services, which are not highly sensitive to latency (~10 ms), and The XR services also have the characteristics of quasi-periodicity and variable service burst size. Therefore, the related art cannot adapt to the characteristics of the determinacy and high latency sensitivity of the TSN, resulting in frequent adjustments of the arrival time or periodicity of service flows on the core network side.

### SUMMARY

The purpose of the technical solution of the present disclosure is to provide a clock system feedback method, an apparatus, a terminal, a network device, and a storage medium, to solve the problem of frequent adjustment of the arrival time or periodicity of service flows on the core network side in the related art.

In order to solve the above technical problem, embodiments of the present disclosure provide the following technical solutions:

In a first aspect, some embodiments of the present disclosure provide a clock system feedback method applied to a terminal, the method including:
sending target information related to Radio Access Network (RAN) side feedback to a network device, wherein the target information includes at least one of: burst arrival time offset; adjusted periodicity; and variation value of adjustable periodicity.

Alternatively, the method further includes:
receiving target configuration information sent by the network device;
wherein the sending target information related to RAN side feedback to a network device, includes:
   sending the target information to the network device according to the target configuration information;
   wherein the target configuration information includes at least one of:
      a burst arrival time offset threshold, wherein the terminal reports the burst arrival time offset in a case where the burst arrival time offset in the target information reaches the threshold;
      an adjusted periodicity threshold, wherein the terminal reports the adjusted periodicity in a case where the adjusted periodicity in the target information reaches the adjusted periodicity threshold;
      a variation threshold of the adjustable periodicity, wherein the terminal reports the variation value of the adjustable periodicity in a case where the variation value of the adjustable periodicity in the target information reaches the variation threshold of the adjustable periodicity;
      first configuration information of a reporting timer, wherein the terminal reports the target information within a running time of the reporting timer indicated by the first configuration information;
      second configuration information of a prohibition timer, wherein the terminal is prohibited to report the target information within a running time of the prohibition timer indicated by the second configuration information;
      a first count threshold, wherein the terminal reports the burst arrival time offset in a case where the burst arrival time offset in the target information exceeds the burst arrival time offset threshold and the number of exceeding times reaches the first count threshold;
      a second count threshold, wherein the terminal reports the adjusted periodicity in a case where the adjusted periodicity in the target information exceeds the adjusted periodicity threshold and the number of exceeding times reaches the second count threshold;
      a third count threshold, wherein the terminal reports the variation value of the adjustable periodicity in a case where the variation value of the adjustable periodicity in the target information exceeds the variation threshold of the adjustable periodicity and the number of exceeding times reaches the third count threshold;
      at least one burst arrival time offset interval and an index value corresponding to each such burst arrival time offset interval;
      at least one adjusted periodicity interval and an index value corresponding to each such adjusted periodicity interval;
      at least one variation value interval of the adjustable periodicity and an index value corresponding to each such variation value interval of the adjustable periodicity.

Alternatively, the method further includes:
receiving first indication information sent by the network device;
wherein the sending target information related to RAN side feedback to the network device, includes:
   starting to send the target information to the network device according to the first indication information.
Alternatively, in a case where the target information includes the burst arrival time offset, the sending target information related to RAN side feedback to the network device, includes:
   sending first signaling to the network device;
   wherein the first signaling is configured to indicate that a duration between a time at which the terminal sends the first signaling and a next expected air interface transmission opportunity after sending the first signaling is the burst arrival time offset;
   the first signaling is an uplink Scheduling Request (SR), a Buffer Status Report Medium Access Control Control Element (MAC CE), or a first MAC CE.

Alternatively, in a case where the first signaling is the first MAC CE, the first MAC CE includes second indication information, and the second indication information is configured to indicate that a duration between a time at which the terminal sends the first signaling and a next expected air interface transmission opportunity after sending the first signaling is the burst arrival time offset.

Alternatively, the sending target information related to RAN side feedback to the network device, includes:
sending a second MAC CE to the network device;
wherein the second MAC CE includes at least one of:
   third indication information configured to indicate the burst arrival time offset;
   fourth indication information configured to indicate the adjusted periodicity;
   fifth indication information configured to indicate the variation value of the adjustable periodicity;
   the target information of a target Quality of Service (QoS) flow;
   an index value corresponding to the target information of the target QoS flow;
   the target information of a logical channel in a target logical channel group;
   an index value corresponding to the target information of the logical channel in the target logical channel group;
   the target information of a target data radio bearer;
   an index value corresponding to the target information of the target data radio bearer.

Alternatively, before the sending target information related to RAN side feedback to the network device, the method further includes:
sending sixth indication information to the network device, wherein the sixth indication information is configured to indicate a capability of the terminal to support reporting the target information.

Alternatively, the method further includes:
receiving seventh indication information sent by the network device, wherein the seventh indication information is configured to indicate the terminal to stop sending the target information to the network device.

In a second aspect, some embodiments of the present disclosure further provide a clock system feedback method applied to a network device, the method including:
receiving target information related to Radio Access Network (RAN) side feedback sent by a terminal, wherein the target information includes at least one of: burst arrival time offset; adjusted periodicity; and variation value of adjustable periodicity.

Alternatively, the method further includes:
sending target configuration information to the terminal;
wherein the receiving target information related to RAN side feedback sent by a terminal, includes:
   receiving the target information sent by the terminal according to the target configuration information;
   wherein the target configuration information includes at least one of:
      a burst arrival time offset threshold, wherein the terminal reports the burst arrival time offset in a case where the burst arrival time offset in the target information reaches the threshold;
      an adjusted periodicity threshold, wherein the terminal reports the adjusted periodicity in a case where the adjusted periodicity in the target information reaches the adjusted periodicity threshold;
      a variation threshold of the adjustable periodicity, wherein the terminal reports the variation value of the adjustable periodicity in a case where the variation value of the adjustable periodicity in the target information reaches the variation threshold of the adjustable periodicity;
      first configuration information of a reporting timer, wherein the terminal reports the target information within a running time of the reporting timer indicated by the first configuration information;
      second configuration information of a prohibition timer, wherein the terminal is prohibited to report the target information within a running time of the prohibition timer indicated by the second configuration information;
      a first count threshold, wherein the terminal reports the burst arrival time offset in a case where the burst arrival time offset in the target information exceeds the burst arrival time offset threshold and the number of exceeding times reaches the first count threshold;
      a second count threshold, wherein the terminal reports the adjusted periodicity in a case where the adjusted periodicity in the target information exceeds the adjusted periodicity threshold and the number of exceeding times reaches the second count threshold;
      a third count threshold, wherein the terminal reports the variation value of the adjustable periodicity in a case where the variation value of the adjustable periodicity in the target information exceeds the variation threshold of the adjustable periodicity and the number of exceeding times reaches the third count threshold;
      at least one burst arrival time offset interval and an index value corresponding to each such burst arrival time offset interval;
      at least one adjusted periodicity interval and an index value corresponding to each such adjusted periodicity interval;
      at least one variation value interval of the adjustable periodicity and an index value corresponding to each such variation value interval of the adjustable periodicity.

Alternatively, before the receiving target information related to RAN side feedback sent by a terminal, the method further includes:
sending first indication information to the terminal, wherein the first indication information is configured to indicate the terminal to start sending the target information to the network device.

Alternatively, the sending first indication information to the terminal, includes:
sending Radio Resource Control (RRC) signaling or a third MAC layer control element (MAC CE) to the terminal, wherein the RRC signaling or the third MAC CE includes the first indication information.

Alternatively, in a case where the RRC signaling is sent to the terminal, the first indication information includes at least one of:
a first indication bit and a first Quality of Service Flow Identifier (QFI), wherein the first indication bit is configured to indicate the terminal to start sending the target information of a first QoS flow to the network device, and the first QoS flow is a QoS flow corresponding to the first QFI;
a second indication bit and a first logical channel group identifier, wherein the second indication bit is configured to indicate the terminal to start sending the target information of a first logical channel group to the network device, and the first logical channel group is a logical channel group corresponding to the first logical channel group identifier;
a third indication bit and a first data radio bearer identifier, wherein the third indication bit is configured to indicate the terminal to start sending the target information of a first data radio bearer to the network device, and the first data radio bearer is a data radio bearer corresponding to the first data radio bearer identifier.

Alternatively, in a case where the third MAC CE is sent to the terminal, the first indication information includes at least one of:
a second QFI, wherein the second QFI is configured to indicate the terminal to start sending the target information of a second QoS flow to the network device, and the second QoS flow is a QoS flow corresponding to the second QFI;
a second logical channel group identifier, wherein the second logical channel group identifier is configured to indicate the terminal to start sending the target information of a second logical channel group to the network device, and the second logical channel group is a logical channel group corresponding to the second logical channel group identifier;
a second data radio bearer identifier, wherein the second data radio bearer identifier is configured to indicate the terminal to start sending the target information of a second data radio bearer to the network device, and the second data radio bearer is a data radio bearer corresponding to the second data radio bearer identifier;
a fourth indication bit and a third QFI, wherein the fourth indication bit is configured to indicate the terminal to start sending the target information of a third QoS flow to the network device, and the third QoS flow is a QoS flow corresponding to the third QFI;
a fifth indication bit and a third logical channel group identifier, wherein the fifth indication bit is configured to indicate the terminal to start sending the target information of a third logical channel group to the network device, and the third logical channel group is a logical channel group corresponding to the third logical channel group identifier;
a sixth indication bit and a third data radio bearer identifier, wherein the sixth indication bit is configured to indicate the terminal to start sending the target information of a third data radio bearer to the network device, and the third data radio bearer is a data radio bearer corresponding to the third data radio bearer identifier.

Alternatively, the method further includes:
sending the target information to a core network element.

Alternatively, before the receiving target information related to RAN side feedback sent by a terminal, the method further includes:
receiving sixth indication information sent by the terminal, wherein the sixth indication information is configured to indicate a capability of the terminal to support reporting the target information.

Alternatively, the method further includes:
sending seventh indication information to the terminal, wherein the seventh indication information is configured to indicate the terminal to stop sending the target information to the network device.

In a third aspect, some embodiments of the present disclosure further provide a clock system feedback apparatus applied to a terminal, the apparatus including:
a first sending module, configured to send target information related to Radio Access Network (RAN) side feedback to a network device, wherein the target information includes at least one of: burst arrival time offset; adjusted periodicity; and variation value of adjustable periodicity.

In a fourth aspect, some embodiments of the present disclosure further provide a clock system feedback apparatus applied to a network device, the apparatus including:
a first receiving module, configured to receive target information related to Radio Access Network (RAN) side feedback sent by a terminal, wherein the target information includes at least one of: burst arrival time offset; adjusted periodicity; and variation value of adjustable periodicity.

In a fifth aspect, some embodiments of the present disclosure further provide a terminal, including: a processor, a memory, and a program stored in the memory and executable on the processor, wherein the program, in response to being executed by the processor, performs the clock system feedback method according to any one of the first aspect.

In a sixth aspect, some embodiments of the present disclosure further provide a network device, including: a processor, a memory, and a program stored in the memory and executable on the processor, wherein the program, in response to being executed by the processor, performs the clock system feedback method according to any one of the second aspect.

In a seventh aspect, some embodiments of the present disclosure further provide a readable storage medium, storing a program thereon, wherein the program, in response to being executed by a processor, performs the clock system feedback method according to any one of the first aspect, or performs the clock system feedback method according to any one of the second aspect.

At least one of the above technical solutions of the present disclosure has the following beneficial effects.

In the clock system feedback method provided by the present disclosure, the terminal sends the target information related to RAN side feedback to the network device, and the target information includes at least one of burst arrival time offset, adjusted periodicity and variation value of adjustable periodicity, and the network device receives the target information, so that the network device assists a core network side in adjusting service burst arrival time and/or a periodicity of a service flow according to the target information. That is, with assistance of the terminal, the issues that the core network side frequently adjusts the service burst arrival time and/or the periodicity of the service flow due to failure to adapt to deterministic and delay-sensitive characteristics of TSN is avoided.

### BRIEF DESCRIPTION OF THE DRAWINGS

FIG. 1 is a flowchart of a clock system feedback method applied to a terminal provided by some embodiments of the present disclosure.
FIG. 2 is a schematic view of a format of a first MAC CE provided by some embodiments of the present disclosure.
FIG. 3 is a flowchart of a clock system feedback method applied to a network device provided by some embodiments of the present disclosure.
FIG. 4 is a first format view of a format of a third MAC CE provided by some embodiments of the present disclosure.
FIG. 5 is a second schematic view of a format of a third MAC CE provided by some embodiments of the present disclosure.
FIG. 6 is a third schematic view of a format of a third MAC CE provided by some embodiments of the present disclosure.
FIG. 7 is a fourth schematic view of a format of a third MAC CE provided by some embodiments of the present disclosure.
FIG. 8 is a schematic structural view of a clock system feedback apparatus applied to a terminal provided by some embodiments of the present disclosure.
FIG. 9 is a schematic structural view of a clock system feedback apparatus applied to a network device provided by some embodiments of the present disclosure.
FIG. 10 is a schematic structural view of a terminal provided by some embodiments of the present disclosure.
FIG. 11 is a schematic structural view of a network device provided by some embodiments of the present disclosure.

### DETAILED DESCRIPTION OF THE PREFERRED EMBODIMENTS

In order to clarify the technical problems to be solved, solutions, and advantages by the disclosure, the present disclosure will be described more fully below with reference to the relevant drawings and embodiments.

Before explaining the specific implementations of the present disclosure, the following will be provided first:

In a case where a Next Generation Radio Access Network (NG-RAN) receives Time Sensitive Communication Assistance Information (TSCAI) which includes a Burst Arrival Time (BAT) window, a capability of BAT adjustment based on a Quality of Service (QoS) flow, or a periodic range based on a QoS flow, or in a case where the NG-RAN detects that a QoS flow is prohibited to meet a predetermined protocol Packet Delay Budget (PDB), the NG-RAN may notify a core network side of a burst arrival time offset, which is used by the core network side to adjust arrival time or periodicity of a service flow, thereby matching a expected subsequent air interface transmission opportunity.

To solve the issue of frequent adjustment of the arrival time or periodicity of the service flow on the core network side in the related art, embodiments of the present disclosure provide a clock system feedback method, an apparatus, a terminal, a network device and a storage medium.

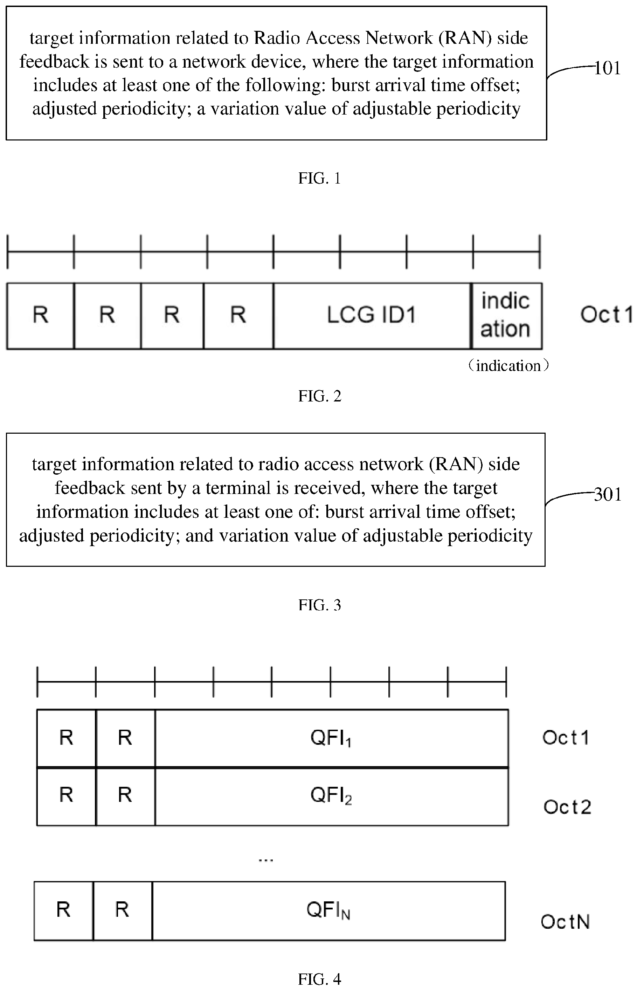

Referring to FIG. 1, some embodiments of the present disclosure provide a clock system feedback method applied to a terminal, and the method may include the operations illustrated at the following blocks.

At block 101, target information related to Radio Access Network (RAN) side feedback is sent to a network device, and the target information includes at least one of the following: burst arrival time offset; adjusted periodicity; a variation value of adjustable periodicity.

It should be noted that the network device is a base station.

In the operations at block 101, the burst arrival time offset refers to time offset between a service burst arrival time and a next expected air interface transmission opportunity, including time offset between an uplink service burst arrival time and a next expected air interface transmission opportunity, and time offset between a downlink service burst arrival time and a next expected air interface transmission opportunity.

In an alternative embodiment of the present disclosure, the method may further include:
the terminal receiving target configuration information sent by the network device. Specifically, the network device sends the target configuration information to the terminal through Radio Resource Control (RRC) signaling.

The sending the target information related to the RAN side feedback to the network device may include:
the terminal sending the target information to the network device according to the target configuration information, where the target configuration information includes at least one of the following items, i.e., the network device configures one or more of the following for the terminal through RRC signaling:
a burst arrival time offset threshold (also referred to as a RAN-side burst arrival time offset threshold), where the terminal reports the burst arrival time offset in a case where the burst arrival time offset in the target information reaches the burst arrival time offset threshold;
an adjusted periodicity threshold (also referred to as a RAN-side periodicity threshold), where the terminal reports adjusted periodicity in a case where the adjusted periodicity in the target information reaches the adjusted periodicity threshold;
a variation threshold of the adjustable periodicity (also referred to as a RAN side periodicity variation threshold), where the terminal reports variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information, i.e., the terminal reports feedback of the target information during the activation of the reporting timer, and stops reporting the feedback of the target information in a case where the reporting timer expires;
second configuration information of a prohibition timer, where the terminal is prohibited to report the target information within a running time of the prohibition timer indicated by the second configuration information; the prohibition timer is configured to prevent the core network side from frequently adjusting the service burst arrival time and/or the periodicity of service flows due to instantaneous jitter, and the terminal stops reporting the feedback of the target information within the activation time of the prohibition timer once the timer is activated;
a first count threshold, where the terminal reports the burst arrival time offset in a case where the burst arrival time offset in the target information exceeds the burst arrival time offset threshold and the number of exceeding times reaches the first count threshold; alternatively, the terminal reports the burst arrival time offset in a case where the burst arrival time offset exceeds the burst arrival time offset threshold and the number of consecutive exceeding times is greater than the first count threshold;
a second count threshold, where the terminal reports the adjusted periodicity in a case where the adjusted periodicity in the target information exceeds the adjusted periodicity threshold and the number of exceeding times reaches the second count threshold; alternatively, the terminal reports the adjusted periodicity in a case where the adjusted periodicity exceeds the adjusted periodicity threshold and the number of consecutive exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold; alternatively, the terminal reports the variation value of the adjustable periodicity in a case where the variation value of the adjustable periodicity exceeds the variation threshold of the adjustable periodicity and the number of consecutive exceeding times reaches the third count threshold; the aforementioned first count threshold, the second count threshold and the third count threshold are configured to prevent the core network side from frequently adjusting the service burst arrival time and/or the periodicity of service flows due to instantaneous jitter;
at least one burst arrival time offset interval and an index value corresponding to each such burst arrival time offset interval, where the burst arrival time offset interval is determined based on a maximum burst arrival time offset value, a minimum burst arrival time offset value and a step size, and the index values are numbered in ascending order, with each such index value corresponding to one burst arrival time offset interval. For example, in a case where the maximum burst arrival time offset value is Tmax, the minimum burst arrival time offset value is Tmin and the step size is step1, obtained burst arrival time offset intervals are T1, T2, T3, ..., where T1<T2<T3, .... That is, the at least one burst arrival time offset interval and the index value corresponding to each such burst arrival time offset interval are configured in the following format: [INDEX1 T1], [INDEX2 T2], [INDEX3 T3], ..., where INDEX1, INDEX2, INDEX3, ... are index values numbered in ascending order;
at least one adjusted periodicity interval and an index value corresponding to each such adjusted periodicity interval, where the determination process and configuration mode of the adjusted periodicity interval are similar to those of the burst arrival time offset interval, and thus will not be repeated herein;
at least one variation value interval of the adjustable periodicity and an index value corresponding to each such variation value interval of the adjustable periodicity, where the determination process and configuration mode of the variation value interval of the adjustable periodicity are similar to those of the burst arrival time offset interval, and thus will not be repeated herein.

It should be noted that the above target configuration information may alternatively be sent to the terminal by a core network element, such as Access and Mobility Management Function (AMF), but the AMF also needs to send the target configuration information to the terminal through a base station.

In an alternative embodiment of the present disclosure, the method may further include:
receiving first indication information sent by the network device.

The sending the target information related to the RAN side feedback to the network device may include:
enabling the target information to be sent to the network device according to the first indication information, i.e., the network device indicates, by way of the first indication information, to enable of RAN side feedback reporting.

Alternatively, after receiving the first indication information, the terminal starts a RAN side feedback reporting timer and monitors RAN side feedback.

In a case where a feedback value of the terminal is burst arrival time offset, i.e., in a case where the target information includes the burst arrival time offset, the sending the target information related to the RAN side feedback to the network device may include:
sending first signaling to the network device, where the first signaling is configured to indicate that a duration between a time at which the terminal sends the first signaling and a next expected air interface transmission opportunity after sending the first signaling is burst arrival time offset; the first signaling is an uplink Scheduling Request (SR), a Buffer Status Report Medium Access Control Control Element (BSR MAC CE), or a first MAC CE, where the first MAC CE is a newly defined MAC CE; and a quantity of the first signaling may be one or more.

In an alternative embodiment, the terminal may send one or more SRs on a dedicated resource, where each such SR indicates to the network device that a duration between a sending moment of the SR and a next expected air interface transmission opportunity is burst arrival time offset; a plurality of such SRs may provide a range of the burst arrival time offset or more accurate burst arrival time offset.

In another alternative embodiment, the terminal may send one or more Buffer Status Report MAC CEs on a dedicated resource, and each such Buffer Status Report MAC CE indicates to the network device that a duration between a sending moment of the Buffer Status Report MAC CE and a next expected air interface transmission opportunity is burst arrival time offset; a plurality of such Buffer Status Report MAC CEs may provide a range of the burst arrival time offset or more accurate burst arrival time offset.

In another alternative embodiment, in a case where the first signaling is the first MAC CE, the first MAC CE includes second indication information, and the second indication information is configured to indicate that a duration between a time at which the terminal sends the first signaling and a next expected air interface transmission opportunity after sending the first signaling is burst arrival time offset; a plurality of such first MAC CEs may provide a range of the burst arrival time offset or more accurate burst arrival time offset; the first MAC CE further includes a target identifier, and the target identifier is a Quality of Service Flow Identity (QFI), a Logical Channel Group Identity (LCG ID), or a Data Radio Bearer Identity (DRB ID); illustratively, a format of the first MAC CE is shown in FIG. 2, and "indication" is the second indication information, and R is a reserved bit.

In a case where the feedback value of the terminal is at least one of the burst arrival time offset, an adjusted periodicity, and a variation value of adjustable periodicity, the terminal reports the target information to the network device by way of one type of MAC CE, i.e., the sending the target information related to the RAN side feedback to the network device may include:
sending a second MAC CE to the network device.

The second MAC CE includes at least one of:
third indication information, configured to indicate the burst arrival time offset, i.e., the third indication information is configured to indicate that the second MAC CE is used to report the burst arrival time offset;
fourth indication information, configured to indicate the adjusted periodicity, i.e., the fourth indication information is configured to indicate that the second MAC CE is used to report the adjusted periodicity;
fifth indication information, configured to indicate the variation value of the adjustable periodicity, i.e., the fifth indication information is configured to indicate that the second MAC CE is used to report the variation value of the adjustable periodicity;
a target QFI and target information of a target Quality of Service (QoS) flow corresponding to the target QFI, where the target information of the target QoS flow includes at least one of: one burst arrival time offset, a plurality of burst arrival time offsets, one adjusted periodicity, a plurality of adjusted periodicities, one variation value of the adjustable periodicity, and a plurality of variation values of the adjustable periodicity;
the target QFI and an index value corresponding to the target information of the target QoS flow corresponding to the target QFI; in a case where the target configuration information configures at least one burst arrival time offset interval and an index value corresponding to each such burst arrival time offset interval, at least one adjusted periodicity interval and an index value corresponding to each such adjusted periodicity interval, and at least one variation value interval of the adjustable periodicity and an index value corresponding to each such variation value interval of the adjustable periodicity, the terminal may determine an interval of the target information of the target QoS flow according to the index value corresponding to the target information of the target QoS flow; after the terminal reports the index value corresponding to the target information of the target QoS flow, the network device may determine the interval of the target information of the target QoS flow according to the index value corresponding to the target information of the target QoS flow;
a target logical channel group identity and the target information of all logical channels in a target logical channel group corresponding to the target logical channel group identity, where the target information of a logical channel includes at least one of: one burst arrival time offset, a plurality of burst arrival time offsets, one adjusted periodicity, a plurality of adjusted periodicities, one variation value of the adjustable periodicity, and a plurality of variation values of the adjustable periodicity;
an index value corresponding to target information of a logical channel in the target logical channel group; in a case where the target configuration information configures at least one burst arrival time offset interval and an index value corresponding to each such burst arrival time offset interval, at least one adjusted periodicity interval and an index value corresponding to each such adjusted periodicity interval, and at least one variation value interval of the adjustable periodicity and an index value corresponding to each such variation value interval of the adjustable periodicity, the terminal may determine the interval of the target information of the logical channel according to the index value corresponding to the target information of the logical channel; after the terminal reports the index value corresponding to the target information of the logical channel, the network device may determine the interval of the target information of the logical channel according to the index value corresponding to the target information of the logical channel;
a target data radio bearer identity and the target information of a target data radio bearer corresponding to the target data radio bearer identity, where the target information of the target data radio bearer includes at least one of: one burst arrival time offset, a plurality of burst arrival time offsets, one adjusted periodicity, a plurality of adjusted periodicities, one variation value of the adjustable periodicity, and a plurality of variation values of the adjustable periodicity;
an index value corresponding to the target information of the target data radio bearer; in a case where the target configuration information configures at least one burst arrival time offset interval and an index value corresponding to each such burst arrival time offset interval, at least one adjusted periodicity interval and an index value corresponding to each such adjusted periodicity interval, and at least one variation value interval of the adjustable periodicity and an index value corresponding to each such variation value interval of the adjustable periodicity, the terminal may determine the interval of the target information of the target data radio bearer according to the index value corresponding to the target information of the target data radio bearer; after the terminal reports the index value corresponding to the target information of the target data radio bearer, the network device may determine the interval of the target information of the target data radio bearer according to the index value corresponding to the target information of the target data radio bearer.

It should also be noted that, in case where the network device configures the target configuration information for the terminal, the terminal sends the target information to the network device according to the any one of the foregoing alternative implementations in a case where the target configuration information is satisfied.

Acquisition of the target information is implemented internally in the terminal.

After the terminal completes reporting of the target information, the terminal starts a RAN side feedback prohibition timer.

It should be noted that before sending the target information related to the RAN side feedback to the network device, the method may further include:
sending sixth indication information to the network device, where the sixth indication information is configured to indicate a capability of the terminal to support reporting of the target information. Specifically, the terminal reports the capability of the terminal to support reporting of the target information to the network device through RRC signaling and/or Non-Access Stratum (NAS) signaling. In a case where the network device is a base station, the base station may further send the capability of the terminal to support reporting of the target information to a core network element, such as an AMF.

Alternatively, the method further includes:
the terminal receiving seventh indication information sent by the network device, where the seventh indication information is configured to indicate the terminal to stop sending the target information to the network device. Specifically, the network device sends the seventh indication information through RRC signaling or a MAC CE, and stops a RAN side feedback reporting timer and a RAN side feedback prohibition timer of the terminal.

Referring to FIG. 3, some embodiments of the present disclosure further provide a clock system feedback method, applied to a network device, and the method may include the operations illustrated at the following blocks.

At block 301, target information related to radio access network (RAN) side feedback sent by a terminal is received, and the target information includes at least one of: burst arrival time offset; adjusted periodicity; and variation value of adjustable periodicity.

It should be noted that the network device is a base station.

In the operations at block 301, the burst arrival time offset is time offset between a service burst arrival time and a next expected air interface transmission opportunity, including time offset between an uplink service burst arrival time and the next expected air interface transmission opportunity, and time offset between a downlink service burst arrival time and the next expected air interface transmission opportunity.

In an alternative embodiment, the method may further include:
sending target configuration information to the terminal. Specifically, the network device sends the target configuration information to the terminal by using Radio Resource Control (RRC) signaling;

The receiving the target information related to RAN side feedback sent by the terminal may include:
the network device receiving the target information sent by the terminal according to the target configuration information, where the target configuration information includes at least one of the following, and the network device configures one or more of the following for the terminal by using RRC signaling:
a burst arrival time offset threshold (also referred to as a RAN-side burst arrival time offset threshold), where the terminal reports the burst arrival time offset in a case where the burst arrival time offset in the target information reaches the burst arrival time offset threshold;
an adjusted periodicity threshold (also referred to as a RAN-side periodicity threshold), where the terminal reports adjusted periodicity in a case where the adjusted periodicity in the target information reaches the adjusted periodicity threshold;
a variation threshold of the adjustable periodicity (also referred to as a RAN side periodicity variation threshold), where the terminal reports variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information, i.e., the terminal reports feedback of the target information during the activation of the reporting timer, and stops reporting the feedback of the target information in a case where the reporting timer expires;
second configuration information of a prohibition timer, where the terminal is prohibited to report the target information within a running time of the prohibition timer indicated by the second configuration information; the prohibition timer is configured to prevent the core network side from frequently adjusting the service burst arrival time and/or the periodicity of service flows due to instantaneous jitter, and the terminal stops reporting the feedback of the target information within the activation time of the prohibition timer once the timer is activated;
a first count threshold, where the terminal reports the burst arrival time offset in a case where the burst arrival time offset in the target information exceeds the burst arrival time offset threshold and the number of exceeding times reaches the first count threshold; alternatively, the terminal reports the burst arrival time offset in a case where the burst arrival time offset exceeds the burst arrival time offset threshold and the number of consecutive exceeding times is greater than the first count threshold;
a second count threshold, where the terminal reports the adjusted periodicity in a case where the adjusted periodicity in the target information exceeds the adjusted periodicity threshold and the number of exceeding times reaches the second count threshold; alternatively, the terminal reports the adjusted periodicity in a case where the adjusted periodicity exceeds the adjusted periodicity threshold and the number of consecutive exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold; alternatively, the terminal reports the variation value of the adjustable periodicity in a case where the variation value of the adjustable periodicity exceeds the variation threshold of the adjustable periodicity and the number of consecutive exceeding times reaches the third count threshold; the aforementioned first count threshold, the second count threshold and the third count threshold are configured to prevent the core network side from frequently adjusting the service burst arrival time and/or the periodicity of service flows due to instantaneous jitter;
at least one burst arrival time offset interval and an index value corresponding to each such burst arrival time offset interval, where the burst arrival time offset interval is determined based on a maximum burst arrival time offset value, a minimum burst arrival time offset value and a step size;
at least one adjusted periodicity interval and an index value corresponding to each such adjusted periodicity interval, where the determination process and configuration mode of the adjusted periodicity interval are similar to those of the burst arrival time offset interval, and thus will not be repeated herein;
at least one variation value interval of the adjustable periodicity and an index value corresponding to each such variation value interval of the adjustable periodicity, where the determination process and configuration mode of the variation value interval of the adjustable periodicity are similar to those of the burst arrival time offset interval, and thus will not be repeated herein.

In an alternative embodiment of the present disclosure, before receiving the target information related to RAN side feedback sent by the terminal, the method may further include:
the network device sending first indication information to the terminal, where the first indication information is configured to indicate the terminal to enable sending of the target information to the network device.

Further, the sending the first indication information to the terminal, includes:
sending RRC signaling or a third Medium Access Control Control Element (MAC CE) to the terminal, where the RRC signaling or the third MAC CE includes the first indication information, i.e., the network device indicates the terminal to enable reporting of the target information by using the RRC signaling or the third MAC CE.

In an alternative implementation, in a case where the RRC signaling is sent to the terminal, the first indication information includes at least one of:
a first indication bit and a first QoS Flow Identity (QFI), where the first indication bit is configured to indicate the terminal to enable sending of the target information of a first QoS flow to the network device; the first QoS flow is a QoS flow corresponding to the first QFI; for example, the first indication bit being 1 indicates that the terminal enables sending of the target information of the first QoS flow to the network device, and the first indication bit being 0 indicates that the terminal disables sending of the target information of the first QoS flow to the network device;
a second indication bit and a first logical channel group identity, where the second indication bit is configured to indicate the terminal to enable sending of the target information of a first logical channel group to the network device; the first logical channel group is a logical channel group corresponding to the first logical channel group identity; for example, the second indication bit being 1 indicates that the terminal enables sending of the target information of the first logical channel group to the network device, and the second indication bit being 0 indicates that the terminal disables sending of the target information of the first logical channel group to the network device;
a third indication bit and a first data radio bearer identity, where the third indication bit is configured to indicate the terminal to enable sending of the target information of a first data radio bearer to the network device; the first data radio bearer is a data radio bearer corresponding to the first data radio bearer identity; for example, the third indication bit being 1 indicates that the terminal enables sending of the target information of the first data radio bearer to the network device, and the third indication bit being 0 indicates that the terminal disables sending of the target information of the first data radio bearer to the network device.

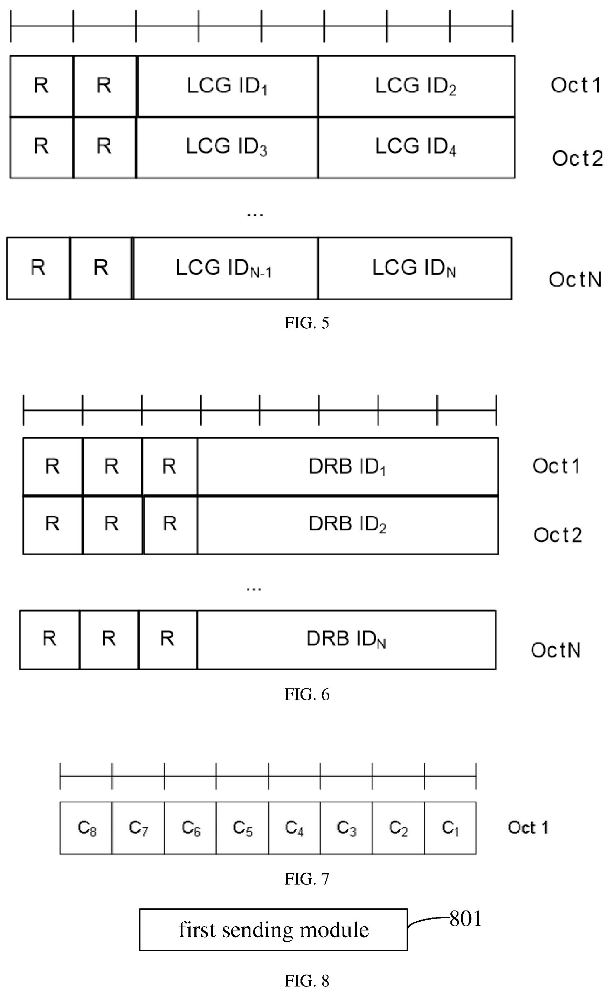

In another alternative embodiment, in a case where the third MAC CE is sent to the terminal, the first indication information includes at least one of:
a second QFI, where the second QFI is configured to indicate the terminal to enable sending of the target information of a second QoS flow to the network device, and the second QoS flow is a QoS flow corresponding to the second QFI, i.e., a field of the second QFI indicates enabling RAN side feedback reporting based on the second QoS flow, and in a case where the second QFI is not included, the terminal is indicated to disable RAN side feedback reporting based on the second QoS flow; and a format of the third MAC CE is shown in FIG. 4, and R is a reserved bit;
a second logical channel group identity (second LCG ID), where the second logical channel group identity is configured to indicate the terminal to enable sending of the target information of a second logical channel group to the network device, and the second logical channel group is a logical channel group corresponding to the second logical channel group identity, i.e., a field of the second LCG ID indicates enabling RAN side feedback reporting based on the second logical channel group, and in a case where the second LCG ID is not included, the terminal is indicated to disable RAN side feedback reporting based on the second logical channel group; and a format of the third MAC CE is shown in FIG. 5, and R is a reserved bit;
a second data radio bearer identity (second DRB ID), where the second data radio bearer identity is configured to indicate the terminal to enable sending of the target information of a second data radio bearer to the network device, and the second data radio bearer is a data radio bearer corresponding to the second data radio bearer identity, i.e., a field of the second DRB ID indicates enabling RAN side feedback reporting based on the second data radio bearer, and in a case where the second DRB ID is not included, the terminal is indicated to disable RAN side feedback reporting based on the second data radio bearer; a format of the third MAC CE is shown in FIG. 6, and R is a reserved bit;
a fourth indication bit and a third QFI, where the fourth indication bit is configured to indicate the terminal to enable sending of the target information of a third QoS flow to the network device; the third QoS flow is a QoS flow corresponding to the third QFI; for example, as shown in FIG. 7, in a case where the fourth indication bit Ci (third QFI) is configured for the third MAC CE, Ci being set to 1 indicates enabling RAN side feedback reporting based on the third QoS flow, and Ci being set to 0 indicates disabling of RAN side feedback reporting based on the third QoS flow;
a fifth indication bit and a third logical channel group identity, where the fifth indication bit is configured to indicate the terminal to enable sending of the target information of a third logical channel group to the network device; and the third logical channel group is a logical channel group corresponding to the third logical channel group identity; for example, referring to FIG. 7, in a case where the fifth indication bit Ci (third logical channel group identity) is configured for the third MAC CE, Ci being set to 1 indicates enabling RAN side feedback reporting based on the third logical channel group, and Ci being set to 0 indicates disabling of RAN side feedback reporting based on the third logical channel group;
a sixth indication bit and a third data radio bearer identity, where the sixth indication bit is configured to indicate the terminal to enable sending of the target information of a third data radio bearer to the network device; the third data radio bearer is a data radio bearer corresponding to the third data radio bearer identity; for example, referring to FIG. 7, in a case where the sixth indication bit Ci (third data radio bearer identity) is configured for the third MAC CE, Ci being set to 1 indicates enabling RAN side feedback reporting based on the third data radio bearer, and Ci being set to 0 indicates disabling of RAN side feedback reporting based on the third data radio bearer.

Alternatively, the method may further include:
sending the target information to a core network element (such as an AMF).

It should be noted that before receiving the target information related to the RAN side feedback sent by the terminal, the method may further include:
the network device receiving sixth indication information sent by the terminal, where the sixth indication information is configured to indicate a capability of the terminal to support reporting of the target information. Specifically, the terminal reports the capability of the terminal to support reporting of the target information to the network device by using RRC signaling and/or Non-Access Stratum (NAS) signaling; in a case where the network device is a base station, the base station may further send the capability of the terminal to support reporting of the target information to a core network element, such as an AMF.

Alternatively, the method may further include:
sending seventh indication information to the terminal, where the seventh indication information is configured to indicate the terminal to stop sending the target information to the network device. Specifically, the network device sends the seventh indication information by using RRC signaling or a MAC CE, and stops a RAN side feedback reporting timer and a RAN side feedback prohibition timer of the terminal.

The clock system feedback method provided by the embodiments of the present disclosure provides a RAN side feedback mechanism for deterministic services for burst arrival time offset and adjusted periodicity, which is used to assist the core network in adjusting arrival time and periodicity of services, improves granularity of feedback reporting, introduces a method for preventing instantaneous jitter, and avoids frequent adjustment of the burst arrival time or periodicity of a service flow on the core network side.

Referring to FIG. 8, some embodiments of the present disclosure further provide a clock system feedback apparatus, applied to a terminal, and the apparatus includes:
a first sending module 801, configured to send target information related to radio access network (RAN) side feedback to a network device. The target information includes at least one of: burst arrival time offset; adjusted periodicity; and variation value of adjustable periodicity.

Alternatively, the apparatus further includes:
a first information receiving module, configured to receive target configuration information sent by the network device.

The first sending module 801 includes:
a first sending unit, configured to send the target information to the network device according to the target configuration information.

The target configuration information includes at least one of:
a burst arrival time offset threshold, where the terminal reports the burst arrival time offset in a case where the burst arrival time offset in the target information reaches the threshold;
an adjusted periodicity threshold, where the terminal reports the adjusted periodicity in a case where the adjusted periodicity in the target information reaches the adjusted periodicity threshold;
a variation threshold of the adjustable periodicity, where the terminal reports variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information;
second configuration information of a prohibition timer, where the terminal is prohibited to report the target information within a running time of the prohibition timer indicated by the second configuration information;
a first count threshold, where the terminal reports the burst arrival time offset in a case where the burst arrival time offset in the target information exceeds the burst arrival time offset threshold and the number of exceeding times reaches the first count threshold;
a second count threshold, where the terminal reports the adjusted periodicity in a case where the adjusted periodicity in the target information exceeds the adjusted periodicity threshold and the number of exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval;
at least one variation value interval of the adjustable periodicity and an index value corresponding to each such variation value interval of the adjustable periodicity.

Alternatively, the apparatus further includes:
a second information receiving module, configured to receive first indication information sent by the network device.

The first sending module 801 includes:
a second sending unit, configured to enable sending of the target information to the network device according to the first indication information.

Alternatively, the first sending module 801 includes a third sending unit.

The third sending unit is configured to send first signaling to the network device in a case where the target information includes the burst arrival time offset.

The first signaling is configured to indicate that a duration between a time at which the terminal sends the first signaling and a next expected air interface transmission opportunity after sending the first signaling is burst arrival time offset;

The first signaling is an uplink Scheduling Request (SR), a Buffer Status Report MAC CE, or a first MAC CE.

Alternatively, in a case where the first signaling is the first MAC CE, the first MAC CE includes second indication information, and the second indication information is configured to indicate that a duration between a time at which the terminal sends the first signaling and a next expected air interface transmission opportunity after sending the first signaling is burst arrival time offset.

Alternatively, the first sending module 801 includes:
a fourth sending unit, configured to send a second MAC CE to the network device.

The second MAC CE includes at least one of:
third indication information configured to indicate the burst arrival time offset;
fourth indication information configured to indicate the adjusted periodicity;
fifth indication information configured to indicate the variation value of the adjustable periodicity;
the target information of a target QoS flow;
an index value corresponding to the target information of the target QoS flow;
the target information of a logical channel in a target logical channel group;
an index value corresponding to the target information of the logical channel in the target logical channel group;
the target information of a target data radio bearer;
an index value corresponding to the target information of the target data radio bearer.

Alternatively, the apparatus further includes:
a first information sending module, configured to send sixth indication information to the network device, where the sixth indication information is configured to indicate a capability of the terminal to support reporting of the target information.

Alternatively, the apparatus further includes:
a third information receiving module, configured to receive seventh indication information sent by the network device, where the seventh indication information is configured to indicate the terminal to stop sending the target information to the network device.

It should be noted that the clock system feedback apparatus applied to the terminal provided by the embodiments of the present disclosure is an apparatus capable of executing the foregoing clock system feedback method applied to the terminal, so all the embodiments of the foregoing clock system feedback method applied to the terminal are applicable to the apparatus, and can achieve the same or similar technical effects.

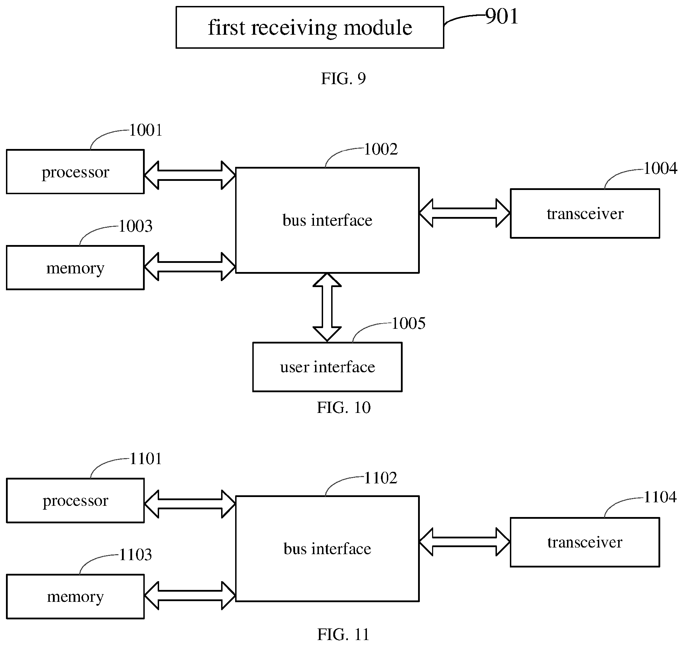

Referring to FIG. 9, some embodiments of the present disclosure further provide a clock system feedback apparatus, applied to a network device, and the apparatus includes:
a first receiving module 901, configured to receive target information related to radio access network (RAN) side feedback sent by a terminal. The target information includes at least one of: burst arrival time offset; adjusted periodicity; and variation value of adjustable periodicity.

Alternatively, the method further includes:
a second information sending module, configured to send target configuration information to the terminal.

The first receiving module 901 includes:
a first receiving unit, configured to receive the target information sent by the terminal according to the target configuration information.

The target configuration information includes at least one of:
a burst arrival time offset threshold, where the terminal reports the burst arrival time offset in a case where the burst arrival time offset in the target information reaches the threshold;
an adjusted periodicity threshold, where the terminal reports the adjusted periodicity in a case where the adjusted periodicity in the target information reaches the adjusted periodicity threshold;
a variation threshold of the adjustable periodicity, where the terminal reports variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information;
second configuration information of a prohibition timer, where the terminal is prohibited to report the target information within a running time of the prohibition timer indicated by the second configuration information;
a first count threshold, where the terminal reports the burst arrival time offset in a case where the burst arrival time offset in the target information exceeds the burst arrival time offset threshold and the number of exceeding times reaches the first count threshold;
a second count threshold, where the terminal reports the adjusted periodicity in a case where the adjusted periodicity in the target information exceeds the adjusted periodicity threshold and the number of exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval;
at least one variation value interval of the adjustable periodicity and an index value corresponding to each such variation value interval of the adjustable periodicity.

Alternatively, the apparatus further includes:
a third information sending module, configured to send first indication information to the terminal. The first indication information is configured to indicate the terminal to enable sending of the target information to the network device.

Alternatively, the third information sending module includes:
a fifth sending unit, configured to send Radio Resource Control (RRC) signaling or a third Medium Access Control Control Element (MAC CE) to the terminal. The RRC signaling or the third MAC CE includes the first indication information.

Alternatively, in a case where the RRC signaling is sent to the terminal, the first indication information includes at least one of:
a first indication bit and a first QoS Flow Identity (QFI), where the first indication bit is configured to indicate the terminal to enable sending of the target information of a first QoS flow to the network device; the first QoS flow is a QoS flow corresponding to the first QFI;
a second indication bit and a first logical channel group identity, where the second indication bit is configured to indicate the terminal to enable sending of the target information of a first logical channel group to the network device; the first logical channel group is a logical channel group corresponding to the first logical channel group identity;
a third indication bit and a first data radio bearer identity, where the third indication bit is configured to indicate the terminal to enable sending of the target information of a first data radio bearer to the network device; the first data radio bearer is a data radio bearer corresponding to the first data radio bearer identity.

Alternatively, in a case where the third MAC CE is sent to the terminal, the first indication information includes at least one of:
a second QFI, where the second QFI is configured to indicate the terminal to enable sending of the target information of a second QoS flow to the network device; the second QoS flow is a QoS flow corresponding to the second QFI;
a second logical channel group identity, where the second logical channel group identity is configured to indicate the terminal to enable sending of the target information of a second logical channel group to the network device; the second logical channel group is a logical channel group corresponding to the second logical channel group identity;
a second data radio bearer identity, where the second data radio bearer identity is configured to indicate the terminal to enable sending of the target information of a second data radio bearer to the network device; the second data radio bearer is a data radio bearer corresponding to the second data radio bearer identity;
a fourth indication bit and a third QFI, where the fourth indication bit is configured to indicate the terminal to enable sending of the target information of a third QoS flow to the network device; the third QoS flow is a QoS flow corresponding to the third QFI;
a fifth indication bit and a third logical channel group identity, where the fifth indication bit is configured to indicate the terminal to enable sending of the target information of a third logical channel group to the network device; the third logical channel group is a logical channel group corresponding to the third logical channel group identity;
a sixth indication bit and a third data radio bearer identity, where the sixth indication bit is configured to indicate the terminal to enable sending of the target information of a third data radio bearer to the network device; the third data radio bearer is a data radio bearer corresponding to the third data radio bearer identity.

Alternatively, the apparatus further includes:
a fourth information sending module, configured to send the target information to a core network element.

Alternatively, the apparatus further includes:
a fourth information receiving module, configured to receive sixth indication information sent by the terminal. The sixth indication information is configured to indicate a capability of the terminal to support reporting of the target information.

Alternatively, the apparatus further includes:
a fifth information sending module, configured to send seventh indication information to the terminal. The seventh indication information is configured to indicate the terminal to stop sending the target information to the network device.

It should be noted that the clock system feedback apparatus applied to the network device provided by the embodiments of the present disclosure is an apparatus capable of executing the foregoing clock system feedback method applied to the network device, so all the embodiments of the foregoing clock system feedback method applied to a network device are applicable to the apparatus, and can achieve the same or similar technical effects.

Referring to FIG. 10, some embodiments of the present disclosure further provide a terminal, including: a processor 1001; and a memory 1003 connected to the processor 1001 via a bus interface 1002, the memory 1003 is configured to store programs and data used by the processor 1001 during execution, and the processor 1001 invokes and executes the programs and data stored in the memory 1003.

A transceiver 1004 is connected to the bus interface 1002 and configured to receive and transmit data under control of the processor 1001. In some embodiments, the processor 1001 is configured to read programs in the memory 1003, and the transceiver 1004 performs the following processes:
sending target information related to radio access network (RAN) side feedback to a network device, where the target information includes at least one of: burst arrival time offset; adjusted periodicity; and variation value of adjustable periodicity.

Alternatively, the transceiver 1004 is further configured to:
receive target configuration information sent by the network device.

The transceiver 1004 is configured to:
send the target information to the network device according to the target configuration information.

The target configuration information includes at least one of:
a burst arrival time offset threshold, where the terminal reports the burst arrival time offset in a case where the burst arrival time offset in the target information reaches the threshold;
an adjusted periodicity threshold, where the terminal reports the adjusted periodicity in a case where the adjustable adjusted in the target information reaches the adjusted periodicity threshold;
a variation threshold of the adjustable periodicity, where the terminal reports variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information;
second configuration information of a prohibition timer, where the terminal is prohibited to report the target information within a running time of the prohibition timer indicated by the second configuration information;
a first count threshold, where the terminal reports the burst arrival time offset in a case where the burst arrival time offset in the target information exceeds the burst arrival time offset threshold and the number of exceeding times reaches the first count threshold;
a second count threshold, where the terminal reports the adjusted periodicity in a case where the adjusted periodicity in the target information exceeds the adjusted periodicity threshold and the number of exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval;
at least one variation value interval of the adjustable periodicity and an index value corresponding to each such variation value interval of the adjustable periodicity.

Alternatively, the transceiver 1004 is further configured to:
receive first indication information sent by the network device.

The transceiver 1004 is configured to:
enable sending of the target information to the network device according to the first indication information.

Alternatively, the transceiver 1004 is configured to:
send first signaling to the network device in a case where the target information includes the burst arrival time offset.

The first signaling is configured to indicate that a duration between a time at which the terminal sends the first signaling and a next expected air interface transmission opportunity after sending the first signaling is burst arrival time offset.

The first signaling is an uplink Scheduling Request (SR), a Buffer Status Report MAC CE, or a first MAC CE.

Alternatively, in a case where the first signaling is the first MAC CE, the first MAC CE includes second indication information, and the second indication information is configured to indicate that a duration between a time at which the terminal sends the first signaling and a next expected air interface transmission opportunity after sending the first signaling is burst arrival time offset.

Alternatively, the transceiver 1004 is configured to:
send a second MAC CE to the network device.

The second MAC CE includes at least one of:
third indication information configured to indicate the burst arrival time offset;
fourth indication information configured to indicate the adjusted periodicity;
fifth indication information configured to indicate the variation value of the adjustable periodicity;
the target information of a target QoS flow;
an index value corresponding to the target information of the target QoS flow;
the target information of a logical channel in a target logical channel group;
an index value corresponding to the target information of the logical channel in the target logical channel group;
the target information of a target data radio bearer;
an index value corresponding to the target information of the target data radio bearer.

Alternatively, the transceiver 1004 is further configured to:
send sixth indication information to the network device. The sixth indication information is configured to indicate a capability of the terminal to support reporting of the target information.

Alternatively, the transceiver 1004 is further configured to:
receive seventh indication information sent by the network device. The seventh indication information is configured to indicate the terminal to stop sending the target information to the network device.

In FIG. 10, the bus architecture may include any number of interconnected buses and bridges, which link together various circuits of one or more processors represented by the processor 1001 and a memory represented by the memory 1003. The bus architecture may also link various other circuits such as peripheral devices, voltage regulators, and power management circuits, which are well known in the art, and thus are not further described herein. The bus interface provides a user interface 1005. The transceiver 1004 may be a plurality of elements, i.e., including a transmitter and a receiver, and provides units for communicating with various other apparatuses over a transmission medium. The processor 1001 is responsible for managing the bus architecture and general processing, and the memory 1003 may store data used by the processor 1001 during execution.

Referring to FIG. 11, some embodiments of the present disclosure further provide a network device, includes: a processor 1101; and a memory 1103 connected to the processor 1101 via a bus interface 1102, and the memory 1103 is configured to store programs and data used by the processor 1101 during execution, and the processor 1101 invokes and executes the programs and data stored in the memory 1103.

A transceiver 1104 is connected to the bus interface 1102 and configured to receive and transmit data under control of the processor 1101. Specifically, the processor 1101 is configured to read programs in the memory 1103, and the transceiver 1104 performs the following processes:
receiving target information related to radio access network (RAN) side feedback sent by a terminal, where the target information includes at least one of: burst arrival time offset; adjusted periodicity; and variation value of adjustable periodicity.

Alternatively, the transceiver 1104 is further configured to:
send target configuration information to the terminal;
the transceiver 1104 is configured to:
receive the target information sent by the terminal according to the target configuration information.

The target configuration information includes at least one of:
a burst arrival time offset threshold, where the terminal reports the burst arrival time offset in a case where the burst arrival time offset in the target information reaches the threshold;
an adjusted periodicity threshold, where the terminal reports the adjusted periodicity in a case where the adjusted periodicity in the target information reaches the adjusted periodicity threshold;
a variation threshold of the adjustable periodicity, where the terminal reports the variation value of the adjustable periodicity in a case where the variation value of the adjustable periodicity in the target information reaches the variation threshold of the adjustable periodicity;
first configuration information of a reporting timer, where the terminal reports the target information within a running time of the reporting timer indicated by the first configuration information;
second configuration information of a prohibition timer, where the terminal is prohibited to report the target information within a running time of the prohibition timer indicated by the second configuration information;
a first count threshold, where the terminal reports the burst arrival time offset in a case where the burst arrival time offset in the target information exceeds the burst arrival time offset threshold and the number of exceeding times reaches the first count threshold;
a second count threshold, where the terminal reports the adjusted periodicity in a case where the adjusted periodicity in the target information exceeds the adjusted periodicity threshold and the number of exceeding times reaches the second count threshold;
a third count threshold, where the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval;
at least one variation value interval of the adjustable periodicity and an index value corresponding to each such variation value interval of the adjustable periodicity.

Alternatively, the transceiver 1104 is further configured to:
send first indication information to the terminal. The first indication information is configured to indicate the terminal to enable sending of the target information to the network device.

Alternatively, specifically, the transceiver 1104 is configured to:
send Radio Resource Control (RRC) signaling or a third Medium Access Control Control Element (MAC CE) to the terminal. The RRC signaling or the third MAC CE includes the first indication information.

Alternatively, in a case where the RRC signaling is sent to the terminal, the first indication information includes at least one of:
a first indication bit and a first QoS Flow Identity (QFI), where the first indication bit is configured to indicate the terminal to enable sending of the target information of a first QoS flow to the network device; the first QoS flow is a QoS flow corresponding to the first QFI;
a second indication bit and a first logical channel group identity, where the second indication bit is configured to indicate the terminal to enable sending of the target information of a first logical channel group to the network device; the first logical channel group is a logical channel group corresponding to the first logical channel group identity;
a third indication bit and a first data radio bearer identity, where the third indication bit is configured to indicate the terminal to enable sending of the target information of a first data radio bearer to the network device; the first data radio bearer is a data radio bearer corresponding to the first data radio bearer identity.

Alternatively, in a case where the third MAC CE is sent to the terminal, the first indication information includes at least one of:
a second QFI, where the second QFI is configured to indicate the terminal to enable sending of the target information of a second QoS flow to the network device; the second QoS flow is a QoS flow corresponding to the second QFI;
a second logical channel group identity, where the second logical channel group identity is configured to indicate the terminal to enable sending of the target information of a second logical channel group to the network device; the second logical channel group is a logical channel group corresponding to the second logical channel group identity;
a second data radio bearer identity, where the second data radio bearer identity is configured to indicate the terminal to enable sending of the target information of a second data radio bearer to the network device; the second data radio bearer is a data radio bearer corresponding to the second data radio bearer identity;
a fourth indication bit and a third QFI, where the fourth indication bit is configured to indicate the terminal to enable sending of the target information of a third QoS flow to the network device; the third QoS flow is a QoS flow corresponding to the third QFI;
a fifth indication bit and a third logical channel group identity, where the fifth indication bit is configured to indicate the terminal to enable sending of the target information of a third logical channel group to the network device; the third logical channel group is a logical channel group corresponding to the third logical channel group identity;
a sixth indication bit and a third data radio bearer identity, where the sixth indication bit is configured to indicate the terminal to enable sending of the target information of a third data radio bearer to the network device; the third data radio bearer is a data radio bearer corresponding to the third data radio bearer identity.

Alternatively, the transceiver 1104 is further configured to:
send the target information to a core network element.

Alternatively, the transceiver 1104 is further configured to:
receive sixth indication information sent by the terminal. The sixth indication information is configured to indicate a capability of the terminal to support reporting of the target information.

Alternatively, the transceiver 1104 is further configured to:
send seventh indication information to the terminal. The seventh indication information is configured to indicate the terminal to stop sending the target information to the network device.

In FIG. 11, the bus architecture may include any number of interconnected buses and bridges, which link together various circuits of one or more processors represented by the processor 1101 and a memory represented by the memory 1103. The bus architecture may also link various other circuits such as peripheral devices, voltage regulators, and power management circuits, which are well known in the art, and thus are not further described herein. The bus interface provides an interface. The transceiver 1104 may include a plurality of elements, i.e., including a transmitter and a receiver, and provides units for communicating with various other apparatuses over a transmission medium. The processor 1101 is responsible for managing the bus architecture and general processing, and the memory 1103 may store data used by the processor 1101 during execution.

In addition, a specific embodiment of the present disclosure further provides a computer-readable storage medium storing a computer program thereon. The program, in response to being executed by a processor, implements the operations in the clock system feedback method applied to the terminal as described in any one of the above, or implements the operations in the clock system feedback method applied to the network device as described in any one of the above.

In several embodiments provided in the present disclosure, it should be understood that the disclosed method and apparatus may be implemented in other manners. For example, the apparatus embodiments described above are merely illustrative; for example, the division of the units is only a logical function division, and there may be another division manner in actual implementation, for example, multiple units or components may be combined or integrated into another system, or some features may be omitted or not performed. In addition, the coupling, direct coupling or communication connection between each other shown or discussed may be implemented through some interfaces, apparatuses or units, and may be electrical, mechanical or in other forms.

In addition, each functional unit in each embodiment of the present disclosure may be integrated into one processing unit, or each unit may be separately and physically included, or two or more units may be integrated into one unit. The integrated unit may be implemented in a form of hardware, or in a form of hardware plus a software functional unit.

The integrated unit implemented in the form of a software functional unit may be stored in a computer-readable storage medium. The software functional unit is stored in a storage medium and includes several instructions for causing a computer device (which may be a personal computer, a server, or a network device) to execute part of the operations of the transmission and reception method described in each embodiment of the present disclosure. The storage medium includes: a USB flash drive, a mobile hard disk, a Read-Only Memory (ROM), a Random Access Memory (RAM), a magnetic disk, an optical disk, or other various media that can store program codes.

The above are preferred embodiments of the present disclosure. It should be noted that, for those skilled in the art, several modifications and improvements may be made without departing from the concept of the present disclosure, which are all within the scope of protection of the present disclosure.

## Claims

1. A clock system feedback method applied to a terminal, comprising:
sending target information related to Radio Access Network (RAN) side feedback to a network device, wherein the target information comprises at least one of:
burst arrival time offset;
adjusted periodicity; and
variation value of adjustable periodicity.

2. The method as claimed in claim 1, further comprising:
receiving target configuration information sent by the network device;
wherein the sending target information related to RAN side feedback to a network device, comprises:
sending the target information to the network device according to the target configuration information;
the target configuration information comprises at least one of:
a burst arrival time offset threshold, wherein the terminal reports the burst arrival time offset in a case where the burst arrival time offset in the target information reaches the threshold;
an adjusted periodicity threshold, wherein the terminal reports the adjusted periodicity in a case where the adjusted periodicity in the target information reaches the adjusted periodicity threshold;
a variation threshold of the adjustable periodicity, wherein the terminal reports the variation value of the adjustable periodicity in a case where the variation value of the adjustable periodicity in the target information reaches the variation threshold of the adjustable periodicity;
first configuration information of a reporting timer, wherein the terminal reports the target information within a running time of the reporting timer indicated by the first configuration information;
second configuration information of a prohibition timer, wherein the terminal is prohibited to report the target information within a running time of the prohibition timer indicated by the second configuration information;
a first count threshold, wherein the terminal reports the burst arrival time offset in a case where the burst arrival time offset in the target information exceeds the burst arrival time offset threshold and the number of exceeding times reaches the first count threshold;
a second count threshold, wherein the terminal reports the adjusted periodicity in a case where the adjusted periodicity in the target information exceeds the adjusted periodicity threshold and the number of exceeding times reaches the second count threshold;
a third count threshold, wherein the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval; and
at least one variation value interval of the adjustable periodicity and an index value corresponding to each such variation value interval of the adjustable periodicity.

3. The method as claimed in claim 1, further comprising:
receiving first indication information sent by the network device;
wherein the sending target information related to RAN side feedback to a network device, comprises:
starting to send the target information to the network device according to the first indication information.

4. The method as claimed in claim 1, wherein, in a case where the target information comprises the burst arrival time offset, the sending target information related to RAN side feedback to a network device, comprises:
sending first signaling to the network device;
the first signaling is configured to indicate a duration between a time at which the terminal sends the first signaling and a next expected air interface transmission opportunity after sending the first signaling is the burst arrival time offset;
the first signaling is an uplink Scheduling Request (SR), a Buffer Status Report Medium Access Control Control Element (MAC CE), or a first MAC CE.

5. The method as claimed in claim 4, wherein, in a case where the first signaling is the first MAC CE, the first MAC CE comprises second indication information, and the second indication information is configured to indicate a duration between a time at which the terminal sends the first signaling and a next expected air interface transmission opportunity after sending the first signaling is the burst arrival time offset.

6. The method as claimed in claim 1, wherein the sending target information related to RAN side feedback to a network device, comprises:
sending a second MAC CE to the network device;
the second MAC CE comprises at least one of:
third indication information configured to indicate the burst arrival time offset;
fourth indication information configured to indicate the adjusted periodicity;
fifth indication information configured to indicate the variation value of the adjustable periodicity;
the target information of a target Quality of Service (QoS) flow;
an index value corresponding to the target information of the target QoS flow;
the target information of a logical channel in a target logical channel group;
an index value corresponding to the target information of the logical channel in the target logical channel group;
the target information of a target data radio bearer; and
an index value corresponding to the target information of the target data radio bearer.

7. The method as claimed in claim 1, wherein before the sending target information related to RAN side feedback to a network device, the method further comprises:
sending sixth indication information to the network device, wherein the sixth indication information is configured to indicate a capability of the terminal to support reporting the target information.

8. The method as claimed in claim 1, further comprising:
receiving seventh indication information sent by the network device, wherein the seventh indication information is configured to indicate the terminal to stop sending the target information to the network device.

9. A clock system feedback method applied to a network device, the method comprising:
receiving target information related to Radio Access Network (RAN) side feedback sent by a terminal, wherein the target information comprises at least one of:
burst arrival time offset;
adjusted periodicity; and
variation value of adjustable periodicity.

10. The method as claimed in claim 9, further comprising:
sending target configuration information to the terminal;
wherein the receiving target information related to RAN side feedback sent by a terminal, comprises:
receiving the target information sent by the terminal according to the target configuration information;
the target configuration information comprises at least one of:
a burst arrival time offset threshold, wherein the terminal reports the burst arrival time offset in a case where the burst arrival time offset in the target information reaches the threshold;
an adjusted periodicity threshold, wherein the terminal reports the adjusted periodicity in a case where the adjusted periodicity in the target information reaches the adjusted periodicity threshold;
a variation threshold of the adjustable periodicity, wherein the terminal reports the variation value of the adjustable periodicity in a case where the variation value of the adjustable periodicity in the target information reaches the variation threshold of the adjustable periodicity;
first configuration information of a reporting timer, wherein the terminal reports the target information within a running time of the reporting timer indicated by the first configuration information;
second configuration information of a prohibition timer, wherein the terminal is prohibited to report the target information within a running time of the prohibition timer indicated by the second configuration information;
a first count threshold, wherein the terminal reports the burst arrival time offset in a case where the burst arrival time offset in the target information exceeds the burst arrival time offset threshold and the number of exceeding times reaches the first count threshold;
a second count threshold, wherein the terminal reports the adjusted periodicity in a case where the adjusted periodicity in the target information exceeds the adjusted periodicity threshold and the number of exceeding times reaches the second count threshold;
a third count threshold, wherein the terminal reports the variation value of the adjustable periodicity in a case where the variation value of the adjustable periodicity in the target information exceeds the variation threshold of the adjustable periodicity and the number of exceeding times reaches the third count threshold;
at least one burst arrival time offset interval and an index value corresponding to each such burst arrival time offset interval;
at least one adjusted periodicity interval and an index value corresponding to each such adjusted periodicity interval; and
at least one variation value interval of the adjustable periodicity and an index value corresponding to each such variation value interval of the adjustable periodicity.

11. The method as claimed in claim 9, wherein before the receiving target information related to RAN side feedback sent by a terminal, the method further comprises:
sending first indication information to the terminal, wherein the first indication information is configured to indicate the terminal to start sending the target information to the network device.

12. The method as claimed in claim 11, wherein the sending first indication information to the terminal, comprises:
sending Radio Resource Control (RRC) signaling or a third MAC layer control element (MAC CE) to the terminal, wherein the RRC signaling or the third MAC CE comprises the first indication information.

13. The method as claimed in claim 12, wherein, in a case where the RRC signaling is sent to the terminal, the first indication information comprises at least one of:
a first indication bit and a first Quality of Service Flow Identifier (QFI), wherein the first indication bit is configured to indicate the terminal to start sending the target information of a first QoS flow to the network device, and the first QoS flow is a QoS flow corresponding to the first QFI;
a second indication bit and a first logical channel group identifier, wherein the second indication bit is configured to indicate the terminal to start sending the target information of a first logical channel group to the network device, and the first logical channel group is a logical channel group corresponding to the first logical channel group identifier; and
a third indication bit and a first data radio bearer identifier, wherein the third indication bit is configured to indicate the terminal to start sending the target information of a first data radio bearer to the network device, and the first data radio bearer is a data radio bearer corresponding to the first data radio bearer identifier.

14. The method as claimed in claim 12, wherein, in a case where the third MAC CE is sent to the terminal, the first indication information comprises at least one of:
a second QFI, wherein the second QFI is configured to indicate the terminal to start sending the target information of a second QoS flow to the network device, and the second QoS flow is a QoS flow corresponding to the second QFI;
a second logical channel group identifier, wherein the second logical channel group identifier is configured to indicate the terminal to start sending the target information of a second logical channel group to the network device, and the second logical channel group is a logical channel group corresponding to the second logical channel group identifier;
a second data radio bearer identifier, wherein the second data radio bearer identifier is configured to indicate the terminal to start sending the target information of a second data radio bearer to the network device, and the second data radio bearer is a data radio bearer corresponding to the second data radio bearer identifier;
a fourth indication bit and a third QFI, wherein the fourth indication bit is configured to indicate the terminal to start sending the target information of a third QoS flow to the network device, and the third QoS flow is a QoS flow corresponding to the third QFI;
a fifth indication bit and a third logical channel group identifier, wherein the fifth indication bit is configured to indicate the terminal to start sending the target information of a third logical channel group to the network device, and the third logical channel group is a logical channel group corresponding to the third logical channel group identifier; and
a sixth indication bit and a third data radio bearer identifier, wherein the sixth indication bit is configured to indicate the terminal to start sending the target information of a third data radio bearer to the network device, and the third data radio bearer is a data radio bearer corresponding to the third data radio bearer identifier.

15. The method as claimed in claim 9, further comprising:
sending the target information to a core network element.

16. The method as claimed in claim 9, wherein before the receiving target information related to RAN side feedback sent by a terminal, the method further comprises:
receiving sixth indication information sent by the terminal, wherein the sixth indication information is configured to indicate a capability of the terminal to support reporting the target information.

17. The method as claimed in claim 9, further comprising:
sending seventh indication information to the terminal, wherein the seventh indication information is configured to indicate the terminal to stop sending the target information to the network device.

18. A clock system feedback apparatus applied to a terminal, comprising:
a first sending module, configured to send target information related to Radio Access Network (RAN) side feedback to a network device, wherein the target information comprises at least one of:
burst arrival time offset;
adjusted periodicity; and
variation value of adjustable periodicity.

19. A clock system feedback apparatus applied to a network device, comprising:
a first receiving module, configured to receive target information related to Radio Access Network (RAN) side feedback sent by a terminal, wherein the target information comprises at least one of:
burst arrival time offset;
adjusted periodicity; and
variation value of adjustable periodicity.

20. A terminal, comprising:
a processor, a memory, and a program stored in the memory and executable on the processor, wherein the program, in response to being executed by the processor, performs the clock system feedback method as claimed in any one of claims 1 to 8.

21. A network device, comprising:
a processor, a memory, and a program stored in the memory and executable on the processor, wherein the program, in response to being executed by the processor, performs the clock system feedback method as claimed in any one of claims 9 to 17.

22. A readable storage medium, storing a program thereon, wherein the program, in response to being executed by a processor, implements the steps in the clock system feedback method according to any one of claims 1 to 8, or performs the steps in the clock system feedback method as claimed in any one of claims 9 to 17.
